# EUROPEAN PATENT APPLICATION

(11) **EP 4 265 406 A1**
(43) Date of publication of application: **25.10.2023**
(21) Application number: 22739676.9
(22) Date of filing: 12.01.2022
(51) Int. Cl.: B32B 7/023, B32B 7/12, C08J 7/04, B32B 37/02

(54) **WINDOW FILM AND MANUFACTURING METHOD THEREFOR**

(30) Priority: 12.01.2021 KR 20210004000
(71) Applicant: Rayno Korea, Seongnam-si, 13550 (KR)
(72) Inventor: KIM, Hyun Chul, Seoul 04417 (KR); SHIN, Hyun Il, Incheon 22868 (KR); LEE, Jong Hyeok, Bucheon-si, Gyeonggi-do 14405 (KR); KIM, Jin Ho, Gimpo-si Gyeonggi-do 10084 (KR); JEONG, Jae Heon, Gimpo-si, Gyeonggi-do 10063 (KR)
(74) Representative: Witte, Weller & Partner Patentanwälte mbB
(86) International application number: PCT/KR2022/000567
(87) International publication number: WO 2022/154481

(57) **Abstract**

The present disclosure relates to a window film and a method of manufacturing the same. More particularly, the present disclosure relates to a window film and a method of manufacturing the same that prevents a mirror phenomenon from occurring and prevents thermal energy absorbed by the film from being re-emitted into the interior of the film and from increasing the temperature of the room.

## Description

### Technical field

The present disclosure relates to a window film and a method of manufacturing the same. More particularly, the present disclosure relates to a window film that prevents thermal energy absorbed by the film from being re-emitted into the interior of the film and from raising the temperature of an indoor space while preventing a mirror phenomenon caused by the film.

### Background art

Windows of various buildings and vehicles are equipped with transparent glass or resin plates to absorb sunlight. sunlight includes ultraviolet rays with a wavelength range of 380 nm or less, visible light with a wavelength range of 380 nm to 780 nm, and infrared rays with a wavelength range of 780 nm or more. among these rays, near-infrared rays with a wavelength range of 780 nm to 3,000 nm are called heat rays and cause the temperature of the room to rise.

Conventionally, in order to block such heat rays, a method of absorbing infrared rays by coating windows with oxide particles such as antimony tin oxide (ato) and tungsten trioxide (wo3) has been use.

However, the oxide particles re-emit about 30% of the absorbed thermal energy back into the room, thereby increasing the room temperature. For this reason, it was difficult to achieve perfect infrared blocking with the use of the conventional method. In addition, additional problems such as heat conduction and glass heat wave due to absorbed heat also occurred.

Another way to block heat rays is a method of blocking infrared rays by coating windows with a metal that can reflect infrared rays. Window films having an infrared ray blocking effect block heat rays by using reflection rather than absorption, thereby preventing re-emission of the absorbed heat by absorption in advance, thereby having high heat blocking efficiency. However, when the concentration of the metal in the coating is increased to increase the infrared reflectivity, the reflectivity of visible light also increases. This causes a mirror phenomenon on the film surface. Products with mirror effects are likely to be rejected by consumers, and the mirror effects are likely to cause obstructed view of other vehicles or buildings.

To solve this problem, a method of reducing the reflection of visible light by depositing an oxide film on the surface of metal coatings has been proposed. The method refers to a method of primarily forming a metal coating layer with a high metal concentration and secondarily forming an oxide film on the surface of metal coating layer.

However, this method has the problems of low production speed and high production costs due to high technical difficulty.

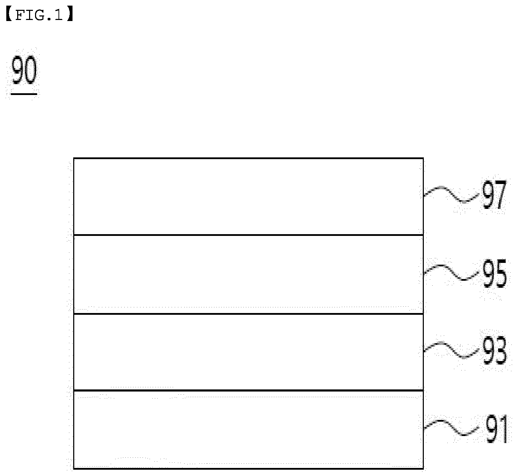

Fig. 1 is a view illustrating a conventional window film 90, which is disclosed in korean patent application publication no. 10-2019-0036015 (2019.04.04).

Referring to fig. 1, the window film 90 includes: a transparent transmissive substrate layer 91; an infrared reflective layer 93 positioned on the transparent transmissive substrate layer 91 and composed of a metal oxide layer and a metal layer; an overcoating layer 95 positioned on the infrared reflective layer 93; and a protective film 97 positioned on the overcoating layer 95 and peelable from the overcoating layer 95.

The transparent transmissive substrate layer 91 may be a configuration serving as a support for a window film and may be made of glass or resin film.

The infrared reflective layer 93 may include the oxides of antimony (Sb), barium (Ba), gallium (Ga), germanium (Ge), hafnium (Hf), indium (In), lanthanum (La), magnesium (Mg), selenium (Se), silicon (Si), tantalum (Ta), titanium (Ti), vanadium (V), yttrium (Y), zinc (Zn), and/or tin (Sn).

The overcoating layer 95 is intended to prevent damage to the infrared reflective layer 93 and may include a cured product of a composition including mono- or polyfunctional photocurable organic compounds and inorganic or organic particles, having a high transmittance to visible light and a low absorptivity to infrared rays.

The protective film 97 may include a surface protective substrate and an adhesive layer, and a known polymer film is used as the surface protective substrate.

However, in the case of such a conventional window film 90, when the concentration of the metal coating is increased as described above, the reflectivity of visible light is also increased, causing a mirror phenomenon to occur on the surface of the film, and the reflection of light from such a mirror phenomenon may cause glare and visibility disturbance to the driver of an opposing vehicle or residents of an opposing building.

As a result, the industry is calling for a new technology that can achieve a full thermal blocking effect, avoid a mirror phenomenon, and not significantly increase manufacturing costs.

(Patent Literature 1) Korean Patent Application laid-open publication No. 10-2019-0036015 (2019.04.04) [2].

### Disclosure

### Technical Problem

The present disclosure has been devised to solve the aforementioned problems,
An objective of the present disclosure is to provide a window film that prevents a mirror phenomenon caused by the film while preventing thermal energy absorbed by the film from being re-emitted into the interior of the film and increasing the temperature of the room.

Another objective of the present disclosure is to configure a light-blocking layer between the outer substrate layer and the inner substrate layer, but to configure a visible light-blocking layer on the inner surface of the outer substrate layer so that the visible light-blocking layer allows infrared light to pass through but blocks visible light among the light entering from the outer surface of the film in the inward direction.

Another objective of the present disclosure is to prevent the mirror phenomenon of the film surface caused by the light-reflective layer by blocking the visible light contained in the light before the light reaches the light-reflective layer so that the light from which the visible light is removed is allowed to reach the light-reflective layer.

Another objective of the present disclosure is to configure a visible light-blocking layer on the outside of the light-reflective layer so that even when the light reflection in the direction of the outside of the film is caused by the light-reflective layer, a portion of the visible light contained in the reflected light is again absorbed by the visible light-blocking layer, thereby reducing the amount of visible light reflected from the outside of the film, thereby blocking the problem of disturbing vision due to the mirror phenomenon and the like.

Another objective of the present disclosure is that the visible light-blocking layer includes 1 wt % to 15 wt % by weight of carbon black dispersion solution relative to the total weight of the adhesive. Thus, when the carbon black dispersion is used less than 1 wt % by weight, a problem that the coloring effect is very low and the visible light-blocking and coloring effect cannot be obtained is prevented, and when the carbon black dispersion is used more than 15wt % by weight, a problem that the blocking rate of not only visible light but also infrared light is increased, and the efficiency of the heat reflective effect of the light-reflective layer is reduced is prevented.

Another objective of the present disclosure is to realize a specific color of a film through a visible light-blocking layer.

Another objective of the present disclosure is to make the visible light-blocking layer have a thickness of 5 to 20 µm after drying. By doing so, it is possible to prevent the problem of low adhesion to polyethylene terephthalate (PET) when the coating is applied with a thickness of less than 5 µm after drying and to prevent the problem that the thickness of the final product becomes too thick when the coating is applied with a thickness exceeding 20 µm and that it becomes difficult to control the smoothness of the surface as the thickness of the coating layer increases, resulting in coating defects such as Orange Peel and Benard Cells.

Another objective of the present disclosure is to configure a light-reflective layer coupled to the inner surface of the visible light-blocking layer to reflect light blocked by the visible light-blocking layer.

Another objective of the present disclosure is to prevent the occurrence of a mirror phenomenon by blocking visible light with a visible light-blocking layer so that light reflected by the light-reflective layer in the outward direction of the film is blocked again by the visible light-blocking layer, and to block the light reflected by the light-reflective layer in the inward direction of the film with the visible light infrared ray blocking layer.

Another objective of the present disclosure is to provide a light-reflective layer with excellent reflection efficiency in the infrared region compared to the visible light region by forming a light-reflective layer formed with a metal film by depositing a metal oxide on polyethylene terephthalate (PET).

Another objective of the present disclosure is to configure a visible light infrared ray blocking layer on the inner surface of the light-reflective layer so that visible light and infrared light are blocked from light that has passed through the visible light-blocking layer and the light-reflective layer in sequence.

Another objective of the present disclosure is to provide a visible light infrared ray blocking layer containing 1 wt % to 100 wt % by weight of carbon black dispersion solution relative to the total weight of the adhesive. By doing so, the problem of reduced infrared blocking rate when less than 1 wt % by weight of carbon black dispersion solution is used, and the problem of reduced dispersibility and possible self-aggregation when more than 100 wt % by weight of carbon black dispersion solution is used are eliminated.

Another objective of the present disclosure is to minimize the occurrence of haze by making the particle size of the metal oxide included in the visible light infrared ray blocking layer be in the range of 5 to 100 µm, thereby preventing the problem that when the particle size of the metal oxide is less than 5 µm, agglomeration occurs quickly and stability during mixing is difficult, and the problem that when the particle size of the metal oxide exceeds 100 µm, the haze of the manufactured film rises and light scattering occurs.

Another objective of the present disclosure is to make the visible light infrared ray blocking layer have a thickness of 5 to 20 um. By doing so, it is possible to prevent the problem of low adhesion to polyethylene terephthalate (PET) when the coating is applied with a thickness of less than 5 µm after drying and to prevent the problem that the thickness of the final product becomes too thick when the coating is applied with a thickness exceeding 20 µm and that it becomes difficult to control the smoothness of the surface as the thickness of the coating layer increases, resulting in coating defects such as Orange Peel and Benard Cells.

Another objective of the present disclosure is to configure an adhesive layer, which is a pressure sensitive adhesive (PSA) coating layer, on the outer surface of the outer substrate layer so that a window film can be easily attached to a glass surface.

Another objective of the present disclosure is to configure a release film layer detachably coupled to the outer surface of the adhesive layer so that the pressure sensitive adhesive (PSA) coating layer can be protected.

The other objective of the present disclosure is to configure a hard coating layer, which is a scratch resistance (SR) coating layer, on the inner surface of the inner substrate layer to prevent scratches on the inside of the film.

### Technical Solution

In order to achieve the aforementioned objectives, the present disclosure is implemented by embodiments having the configurations described below.

According to one embodiment of the present disclosure, the film includes: an outer substrate layer formed on an outside of the film; an inner substrate layer formed inside the film; and a light-blocking layer positioned between the outer substrate layer and the inner substrate layer to block the re-emission of thermal energy absorbed by the film to the inside of the film while preventing a mirror phenomenon of the film.

According to another embodiment of the disclosure, the disclosure includes a visible light-blocking layer, which is coupled to an inner surface of the outer substrate layer to block visible light while allowing infrared light to pass through from the outer surface of the film in an inward direction.

According to another embodiment of the present disclosure, the visible light-blocking layer includes carbon black.

According to another embodiment of the disclosure, the visible light-blocking layer includes 1 wt % to 15 wt % by weight of a carbon black dispersion solution, 5 wt % to 20 wt % by weight of a curing agent, 1 wt % to 20 wt % by weight of an additive, and 20 wt % to 60 wt % by weight of a solvent, relative to the total weight of the adhesive.

According to another embodiment of the present disclosure, the light-blocking layer includes a light-reflective layer coupled to the inner surface of the visible light-blocking layer, which reflects the light whose visible light is blocked by the visible light-blocking layer among the light entering from the outer surface of the film in an inward direction.

According to another embodiment of the present disclosure, in the light reflective layer, a metal film in which a metal material is deposited is formed on a substrate.

According to another embodiment of the present disclosure, the substrate is polyethylene terephthalate (PET).

According to another embodiment of the disclosure, the metal material includes at least one among nickel (Ni), chromium (Cr), aluminum (Al), steel use stainless (SuS)), titanium (Ti), silver (Ag), indium tin oxide (ITO), and aluminum doped zinc oxide (Al-doped ZnO (AZO)).

According to another embodiment of the disclosure, the metal film is formed by sputtering.

According to another embodiment of the disclosure, the light-blocking layer includes a visible light infrared ray blocking layer, which is coupled to an inner surface of the light-reflective layer to block visible light and infrared light from the light that has passed through the light-blocking layer and the light-reflective layer in sequence.

According to another embodiment of the present disclosure, the visible light infrared ray blocking layer includes carbon black and a metal oxide.

According to another embodiment of the disclosure, the visible light infrared ray blocking layer includes 1 wt % to 15 wt % by weight of a carbon black dispersion solution, 1 wt % to 100 wt % by weight of a metal oxide dispersion solution, 5 wt % to 20 wt % by weight of a curing agent, 1 wt % to 20 wt % by weight of an additive, and 20 wt % to 60 wt % by weight of a solvent, relative to the total weight of the adhesive.

According to another embodiment of the disclosure, the metal oxide dispersion solution includes 1 wt % to 20 wt % by weight of metal oxide, 5 wt % to 20 wt % by weight of dispersant, and 50 wt % to 90 wt % by weight of organic solvent.

According to another embodiment of the present disclosure, the metal oxide is selected from the group consisting of antimony tin oxide (ATO), tungsten trioxide (WO₃), indium tin oxide (ITO), and non-radioactive stable isotope heat shielding composite tungsten oxides in the form of ^{(y)}Aₓ^{(z)}WO₍₃₋ₙ₎, in which the ^{(y)}A is a non-radioactive stable isotope, the x is the number of elements doped into the ^{(y)}A according to the reductive calcination, the y is the mass number of A, the z is the mass number of W, and the (3-n) means oxygen deficient.

According to another embodiment of the present disclosure, the metal oxide has a particle size of 5 to 100 nm.

According to another embodiment of the present disclosure, the inner substrate layer is coupled to an inner surface of the visible light infrared ray blocking layer.

According to another embodiment of the present disclosure, the window film further includes: an adhesive layer coupled to an outer surface of the outer substrate layer with a pressure sensitive adhesive (PSA) coating layer; and a release film layer detachably coupled to an outer surface of the adhesive layer to protect the pressure sensitive adhesive (PSA) coating layer.

According to another embodiment of the present disclosure, the window film further includes a hard coating layer, which is coupled to an inner surface of the inner substrate layer as a scratch resistance (SR) coating layer.

According to another embodiment of the disclosure, the disclosure includes: providing an inner substrate layer formed inside the film; forming a visible light infrared ray blocking layer, which is coupled to an outer surface of the inner substrate layer to form a visible light infrared ray blocking layer that blocks visible light and infrared light from light passing through the visible light-blocking layer and the light-reflective layer in sequence after the step of providing the inner substrate layer; forming a light-reflective layer, which is coupled to an outer surface of the visible light infrared ray blocking layer after the above step of forming a visible light infrared ray blocking layer, to form a light-reflective layer that reflects light which is blocked by the visible light-blocking layer; forming a visible light-blocking layer, which is coupled to the outer surface of the light-reflective layer after the step of forming the light-reflective layer, to form a visible light-blocking layer which allows infrared light to pass through while blocking visible light from the outer surface of the film in an inward direction; and forming an outer substrate layer, which forms an outer substrate layer coupled to an outer surface of the visible light-blocking layer after the step of forming the visible light-blocking layer.

According to another embodiment of the present disclosure, forming a visible light infrared ray blocking layer includes: applying a first coating solution on the inner substrate layer; and drying the applied first coating solution after applying the first coating solution.

According to another embodiment of the disclosure, the first coating solution includes 1 wt % to 15 wt % by weight of a carbon black dispersion solution, 1 wt % to 100 wt % by weight of a metal oxide dispersion solution, 5 wt % to 20 wt % by weight of a curing agent, 1 wt % to 20 wt % by weight of an additive, and 20 wt % to 60 wt % by weight of a solvent, relative to the total weight of the adhesive.

According to another embodiment of the present disclosure, the light-reflective layer forming step includes: providing a light-reflective layer in which a metal film with a metal substance deposited on the substrate is formed; and laminating the light-reflective layer, in which, after the light-reflective layer providing step, the provided light-reflective layer is placed on top of the visible light infrared ray blocking layer and tightly bonded by applying pressure.

According to another embodiment of the present disclosure, forming a visible light-blocking layer includes: applying a second coating solution on the light-reflective layer; and drying the applied second coating solution after applying the second coating solution.

According to another embodiment of the disclosure, the second coating solution includes 1 wt % to 15 wt % by weight of a carbon black dispersion solution, 5 wt % to 20 wt % by weight of a curing agent, 1 wt % to 20 wt % by weight of an additive, and 20 wt % to 60 wt % by weight of a solvent, relative to the total weight of the adhesive.

According to another embodiment of the disclosure, forming the outer substrate layer includes: providing an outer substrate layer, in which the outer substrate layer is provided; and laminating the outer substrate layer, in which, after providing the outer substrate layer, the provided outer substrate layer is placed on top of the visible light-blocking layer and tightly bonded by applying pressure.

According to another embodiment of the present disclosure, the method of manufacturing a window film further includes: forming an adhesive layer, in which, after forming the outer substrate layer, a pressure sensitive adhesive (PSA) coating layer is applied to the outer surface of the outer substrate layer to form an adhesive layer; and forming a release film layer, in which, after forming the adhesive layer, a release film layer is detachably coupled to an outer surface of the adhesive layer to protect the pressure sensitive adhesive (PSA) coating layer.

According to another embodiment of the present disclosure, forming the adhesive layer includes: applying an adhesive, in which a pressure sensitive adhesive (PSA) is applied to the outer substrate layer; and drying the adhesive, in which the applied pressure sensitive adhesive (PSA) is dried after the applying adhesive step.

According to another embodiment of the disclosure, forming a release film layer includes: providing a release film layer, in which the release film layer is provided; and laminating a release film layer, in which, after providing a release film layer, the provided release film layer is placed on top of said adhesive layer and tightly bonded by applying pressure.

According to another embodiment of the present disclosure, the method of manufacturing the window film further includes forming a hard coating layer, in which a scratch resistance (SR) coating layer is coupled to an inner surface of the inner substrate layer after forming the release film layer.

### Advantageous Effects

The present disclosure can obtain effects described below due to the configuration, combination, and use relationship described below and described above with reference to the embodiments.

The present disclosure has the effect of providing a window film that prevents a mirror phenomenon caused by the film while preventing thermal energy absorbed by the film from being re-emitted into the interior of the film and increasing the temperature of the room.

The present disclosure provides a light-blocking layer between an outer substrate layer and an inner substrate layer, and a visible light-blocking layer is configured on the inner surface of the outer substrate layer, thereby achieving the effect that the visible light-blocking layer allows infrared light to pass through while blocking visible light.

The present disclosure has the effect of preventing a mirror phenomenon of a film surface by a light-reflective layer by causing the visible light contained in the light to be blocked by the visible light-blocking layer before the light reaches the light-reflective layer, thereby allowing the light from which the visible light has been removed to reach the light-reflective layer.

The present disclosure includes a visible light-blocking layer on the outside of the light-reflective layer so that even when light is reflected from the outside of the film by the light-reflective layer, a portion of the visible light contained in the reflected light is absorbed by the visible light-blocking layer again, thereby reducing the amount of visible light reflected from the outside of the film, thereby having the effect of blocking problems such as obstruction of vision due to a mirror phenomenon.

In the present disclosure, by making the visible light-blocking layer including 1 wt % to 15 wt % by weight of carbon black dispersion solution relative to the total weight of the adhesive, the effect of preventing the problem that the coloring effect is very low and the visible light-blocking and coloring effect cannot be obtained when used below 1 wt % by weight, and the effect of preventing the problem that the blocking rate of not only visible light but also infrared light is increased and the effectiveness of the heat reflection effect of the light-reflective layer is reduced when used above 15 wt % by weight.

The present disclosure has the effect of enabling a specific color of the film to be achieved through the visible light-blocking layer.

The present disclosure has the effect of preventing a problem of low adhesion to polyethylene terephthalate (PET) when applied with a coating of less than 5 µm, by making the thickness of the visible light-blocking layer 5 to 20 µm after drying and preventing a problem of too thick a thickness of the final product and a coating defects such as Orange Peel and Benard Cells occurring due to difficulty in controlling the smoothness of the surface as the thickness of the coating layer increases when applied with a coating of more than 20 µm.

The present disclosure includes a light-reflective layer coupled to an inner surface of a visible light-blocking layer, resulting in the effect of reflecting visible light blocked by the visible light-blocking layer.

The present disclosure has the effect that the light reflected by the light-reflective layer in the outward direction of the film can be blocked again by the visible light-blocking layer to prevent the occurrence of the mirror phenomenon, and the light reflected by the light-reflective layer in the inward direction of the film can be blocked by the visible light infrared ray blocking layer.

The present disclosure has the effect of providing a light-reflective layer with excellent reflection efficiency in the infrared region compared to visible light region by depositing a metal oxide on polyethylene terephthalate (PET) to form a light-reflective layer with a metal film.

The present disclosure configures a visible light infrared blocking layer on the inner surface of the light-reflective layer to achieve the effect that visible light and infrared light are blocked from light that has passed through the visible light-blocking layer and the light-reflective layer in sequence.

The present disclosure has the effect of blocking the problem that the infrared blocking rate decreases when less than 1 wt % by weight of carbon black dispersion solution is used and the problem that self-aggregation may occur due to poor dispersion when more than 100 wt % by weight of carbon black dispersion solution is used by the visible light infrared ray blocking layer including 1 wt % to 100 wt % by weight of carbon black dispersion solution relative to the total weight of the adhesive.

The present disclosure has the effect of minimizing the occurrence of haze by ensuring that the particle size of the metal oxide included in the visible light infrared blocking layer is between 5 and 100 nm and preventing the problem that agglomeration occurs quickly and stability during mixing occurs when the particle size of the metal oxide is less than 5 nm and the problem that light scattering occurs due to an increase in the haze of the manufactured film when the particle size of the metal oxide exceeds 100 nm.

The present disclosure prevents the problem of low adhesion to polyethylene terephthalate (PET) when coated with less than 5 µm and the problem that the thickness of the final product becomes too thick and the surface smoothness is difficult to control as the thickness of the coating layer increases, resulting in coating defects such as orange peel and Benard Cells, when coated with more than 20 µm, by applying the thickness of the visible light infrared ray blocking layer in a range of 5 to 20 µm.

The present disclosure has the effect of enabling a window film to be easily attached to a glass surface or the like by configuring an adhesive layer, which is a pressure sensitive adhesive (PSA) coating layer, on the outer surface of the outer base layer.

The present disclosure has the effect of protecting a pressure sensitive adhesive (PSA) coating layer by configuring a release film layer detachably coupled to an outer surface of the adhesive layer.

The present disclosure achieves the effect of preventing scratches on the inner surface of the inner substrate layer by configuring a hard coating layer, which is a scratch resistance (SR) coating layer, on the inner surface of the film.

### Description of Drawings

FIG. 1 is a diagram of a conventional window film;
FIG. 2 is a diagram of a window film according to an embodiment of the present disclosure;
FIG. 3 is a diagram of a window film according to another embodiment of the present disclosure;
FIG. 4 is a diagram of a window film according to still another embodiment of the present disclosure;
FIG. 5 is a diagram of a method of manufacturing a window film according to one embodiment of the present disclosure;
FIG. 6 is a diagram showing a step of forming the visible infrared ray blocking layer of FIG. 5;
FIG. 7 is a diagram showing the step of forming the light-reflective layer of FIG. 5;
FIG. 8 is a diagram showing the step of providing the visible light-blocking layer of FIG. 5;
FIG. 9 is a diagram showing the step of forming the outer substrate layer of FIG. 5;
FIG. 10 is a diagram showing a method of manufacturing a window film according to another embodiment of the present disclosure;
FIG. 11 is a diagram showing the step of forming the adhesive layer of FIG. 10;
FIG. 12 is a diagram showing the step of forming the release film layer of FIG. 10;
FIG. 13 is a graph of the measured transmittance of a specimen;
FIG. 14 is a graph of the measured reflectance of a specimen; and
FIG. 15 is a graph measuring the thermal blocking performance of the specimen.

### Best Mode

Hereinafter, preferred embodiments of a window film and a manufacturing method thereof according to the present disclosure will be described in detail with reference to the accompanying drawings. In describing the present disclosure, well-known functions or constructions will not be described in detail when it is determined that they may obscure the gist of the present disclosure. Unless otherwise specified, all terms used in the present specification have the same meaning as the general meaning of the terms understood by a person with ordinary skill in the art to which the present disclosure belongs, and if the general meaning conflicts with the meaning of a term used in the present specification, the definition used in the present specification is applied.

As used herein to describe the disclosure, "blocking" is a concept that includes "reflection" and "absorption," and "reflection" and "absorption" are sub-concepts of "blocking" and are distinct from each other.

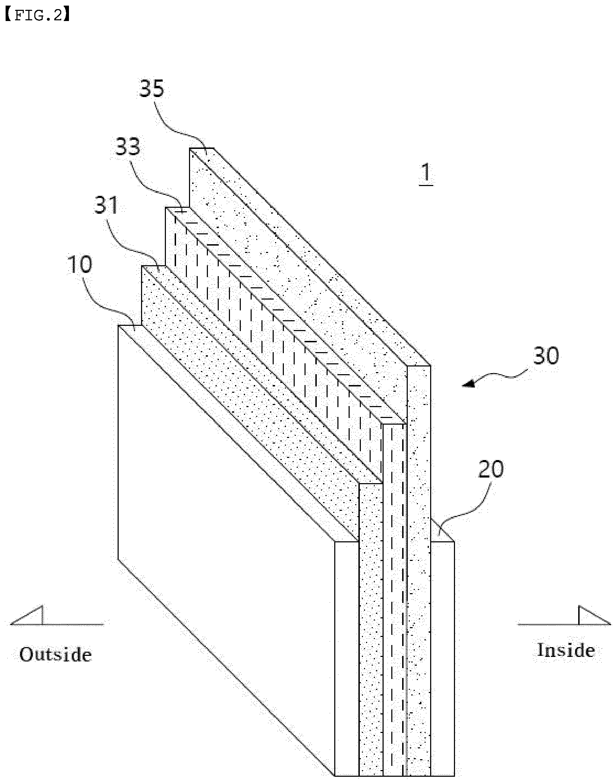

FIG. 2 is a diagram of a window film 1 according to an embodiment of the present disclosure. Referring to FIG. 2, the window film 1 includes an outer substrate layer 10, an inner substrate layer 20, and a light-blocking layer 30.

The outer substrate layer 10 is configured to provide one surface to which the light-blocking layer 30 to be described later is coupled and is formed on the outside of the window film 1. The outer substrate layer 10 is not limited to any specific configuration but may preferably be made of a transparent polyethylene terephthalate (PET) film and may have a thickness in a range of 10 to 100 µm.

The inner substrate layer 20 is configured to provide the other surface to which the light-blocking layer 30 to be described later is coupled, and is formed inside the window film 1, and the inner substrate layer 20 may be coupled to the inner surface of the visible light infrared ray blocking layer 35 to be described later. The inner substrate layer 20 is also not limited to any specific configuration, but may preferably be composed of a transparent polyethylene terephthalate (PET) film, the thickness of which, like the outer substrate layer 10, may be in a range of 10 to 100 um.

The light-blocking layer 30 refers to a configuration that is positioned between the outer substrate layer 10 and the inner substrate layer 20 to block the thermal energy absorbed by the film 1 from being re-emitted to the inner side of the film 1 while preventing a mirror phenomenon of the film 1. The light-blocking layer 30 may be viewed as an assembly in which a plurality of coating layers that block visible light and/or infrared light are combined. Specifically, certain coating layers allow infrared light to pass through while only blocking visible light, which is a concept that includes reflection of visible light and absorption of visible light; other coating layers can reflect light in both outward and inward directions; and still other coating layers can block visible light and infrared light, which is a concept that includes reflection of visible light, absorption of visible light, a reflection of infrared light, and absorption of infrared light.

Such light-blocking layer 30 includes a visible light-blocking layer 31, a light-reflective layer 33, and a visible light infrared ray blocking layer 35.

The visible light-blocking layer 31 refers to a configuration in which the visible light-blocking layer 31 is coupled to the inner surface of the outer substrate layer 10 and blocks (reflects and absorbs) visible light while allowing infrared rays to pass through among the light entering from the outer surface of the film to the inner surface. The visible light-blocking layer 31 is preferably viewed as a carbon coating layer that mainly blocks visible light and has almost no infrared ray blocking function.

Such a visible light-blocking layer 31 is configured on the outside of the light-reflective layer 33 to be described later, so that a portion of the visible light contained in the light is blocked by the visible light-blocking layer 31 before the light reaches the light-reflective layer 33, and since the light having a portion of the visible light blocked by the visible light-blocking layer 31 reaches the light-reflective layer 33 to be described later, it is possible to prevent the occurrence of a mirror phenomenon of the film surface by the light-reflective layer 33.

Furthermore, even when the light reflection in the direction outward of the film occurs by the light-reflective layer 33, a portion of the visible light contained in the reflected light is again filtered by the visible light-blocking layer 31 to reduce the amount of visible light reflected outward of the film, thereby preventing problems such as obstruction of vision due to the mirror phenomenon.

The visible light-blocking layer 31 includes 1 wt % to 15 wt % by weight of a carbon black dispersion solution, 5 wt % to 20 wt % by weight of a curing agent, 1 wt % to 20 wt % by weight of other additives, and 20 wt % to 60 wt % by weight of a solvent, relative to the total weight of the adhesive.

The carbon black dispersion solution may be used in an amount of 1 wt % to 15 wt % by weight depending on the required visible light transmittance (VLT) of the film, since there is a problem that the coloring effect is very low. The visible light-blocking and chromogenic effect cannot be obtained when using less than 1 wt % by weight. There is a problem that the blocking rate of not only visible light but also infrared light increases when using more than 15 wt % by weight, resulting in a decrease in the efficiency of the heat reflection effect of the light-reflective layer 33 to be described later.

The carbon black dispersion solution may include 1 wt % to 20 wt % by weight of carbon black having a particle size of 5 to 100 nm, 5 wt % to 20 wt % by weight of dispersant, and 50 wt % to 90 wt % by weight of organic solvent, relative to the total weight of the dispersion solution.

Furthermore, the visible light-blocking layer 31 may be capable of blocking visible light to prevent reflection of visible light in the outdoor direction and/or may be capable of implementing a specified color. A pigment dispersion solution composed of Phthalocyanine Blue and Vermilion Red may further be used for color correction and may include 1 wt % to 20 wt % by weight of Phthalocyanine Blue and Vermilion Red with a particle size of 5 to 100 nm, 5 wt % to 20 wt % by weight of dispersant, and 50 wt % to 90 wt % by weight of organic solvent, relative to the total weight of the pigment dispersion solution.

The thickness of the visible light-blocking layer 31 is preferably in the range of 5 to 20 µm after drying. When the thickness of the coating is less than 5 µm, the adhesion to polyethylene terephthalate (PET) is reduced, and when the thickness of the coating exceeds 20 µm, the final product becomes too thick to be applied to automotive window films, and as the thickness of the coating layer increases, the smoothness of the surface is difficult to control, resulting in coating defects such as Orange Peel and Benard Cells.

The light-reflective layer 33 is coupled to an inner surface of the visible light-blocking layer 31 and refers to a configuration that reflects light whose visible light is blocked by the visible light-blocking layer 31 among light entering from the outside of the film in an inward direction. The light reflection by the light-reflective layer 33 may be in the outward direction of the film as well as in the inward direction, in which the light reflected by the light-reflective layer 33 in the outward direction of the film may be blocked again by the visible light-blocking layer 31 to prevent the occurrence of a mirror phenomenon, and the light reflected by the light-reflective layer 33 in the inward direction of the film may be blocked by the visible light infrared ray blocking layer 35 to be described later.

The light-reflective layer 33 can be viewed as a configuration in which a metal material is deposited on the substrate to form a metal film.

The substrate refers to the substrate on which the metal material is deposited in the light-reflective layer 33 and may preferably include a polyethylene terephthalate (PET) film, although the present disclosure is not limited to any particular configuration.

The metal material is a material deposited on the substrate and may be selected from metal oxides such as indium tin oxide (ITO), aluminum doped zinc oxide (AZO)/silver (Ag)/aluminum doped zinc oxide (AZO); or metals such as nickel (Ni), chromium (Cr), aluminum (Al), steel use stainless (SuS), titanium (Ti). Among them, a metal oxide with good reflection efficiency in the infrared region compared to visible light region may be more desirable. When cross-sputtering an oxide film with a metal film, such as nickel (Ni)/silver (Ag)/nickel (Ni) laminated sputter film, which is widely used commercially in the window film market, can result in better reflection efficiency in the infrared region compared to the visible region.

The metal film is formed by deposition, which grows a thin film on a substrate and is preferably formed by sputtering, which deposits the material of the target using the phenomenon that members of the target are released from the surface of the target when high-energy particles are irradiated on the target (the material to be deposited), as one of several deposition techniques, such as physics vapor deposition.

The thickness of such a light-reflective layer 33 may be in the range of 12 to 100 µm in order to reduce the final thickness of the product, and a thickness in a range of 12 to 23 µm may be preferred for application to a vehicle window film or the like.

The visible light infrared ray blocking layer 35 is coupled to an inner surface of the light-reflective layer 33, in a configuration that blocks visible light and infrared rays among the light that has passed through the visible light-blocking layer 31 and the light-reflective layer 33 in sequence. In order to block visible light and infrared light, the visible light infrared ray blocking layer 35 may include carbon black and metal oxides.

Specifically, the visible light infrared ray blocking layer 35 includes 1 wt % to 15 wt % by weight of a carbon black dispersion solution, 1 wt % to 100 wt % by weight of a metal oxide or ceramic dispersion solution, 5 wt % to 20 wt % by weight of a curing agent, 1 wt % to 20 wt % by weight of other additives, and 20 wt % to 60 wt % by weight of a solvent, relative to the total weight of the adhesive.

Depending on the required visible light transmittance (VLT) and infrared ray rejection (IRR) of the film, the carbon black dispersion solution may be included 1 wt % to 100 wt % by weight. When less than 1 wt % by weight is used, the infrared ray rejection (IRR) is not expected, and when more than 100 wt % by weight is used, the dispersibility is reduced, and self-aggregation may occur.

The metal oxide dispersion may include 1 wt % to 20 wt % by weight of metal oxides selected from the group consisting of antimony tin oxide (ATO), tungsten trioxide (WO₃), and indium tin oxide (ITO) with a particle size of 5 to 100 nm, a non-radioactive stable isotope heat shield composite tungsten oxide in the form of ^{(y)}Aₓ^{(z)}WO₍₃₋ₙ₎, in which ^{(y)}A is a non-radioactive stable isotope, x is the number of elements doped into the (Y) A according to reductive calcination, y is the mass number of A, z is the mass number of W, and (3-n) means oxygen deficient, 5 wt % to 20 wt % by weight of the dispersant, 50 wt % to 90 wt % by weight of the organic solvent, relative to the total weight of the dispersion solution.

The particle size of the metal oxide may be configured in the range of 5 to 100 µm to minimize the occurrence of haze. The particle size of the metal oxide may be configured in the range of 5 to 100 um to minimize the occurrence of haze. When the particle size of the metal oxide is less than 5 nm, agglomeration is rapid, and stability during mixing is difficult, and when the particle size of the metal oxide exceeds 100 nm, the haze of the manufactured film rises, and light scattering occurs. More preferably, the metal oxide may have a particle size in a range of 20 to 60 nm.

The visible light infrared ray blocking layer 35 is coupled to the outer surface of the inner substrate layer 20 to prevent the reflection of visible light into the inside of the film 1 and to block some infrared rays that have passed through the light-reflective layer 33.

The thickness of the visible light infrared ray blocking layer 35 is preferably the same as that of the visible light-blocking layer 31 and is preferably in a range of 5 to 20 µm after drying. When the thickness of the coating layer is less than 5 µm, the adhesion to polyethylene terephthalate (PET) is reduced and when the thickness of the coating layer is greater than 20 um, the final product is too thick to be applied to automotive window films, etc., and as the thickness of the coating layer increases, it is difficult to control the smoothness of the surface, resulting in a higher probability of coating defects such as Orange Peel and Benard Cells.

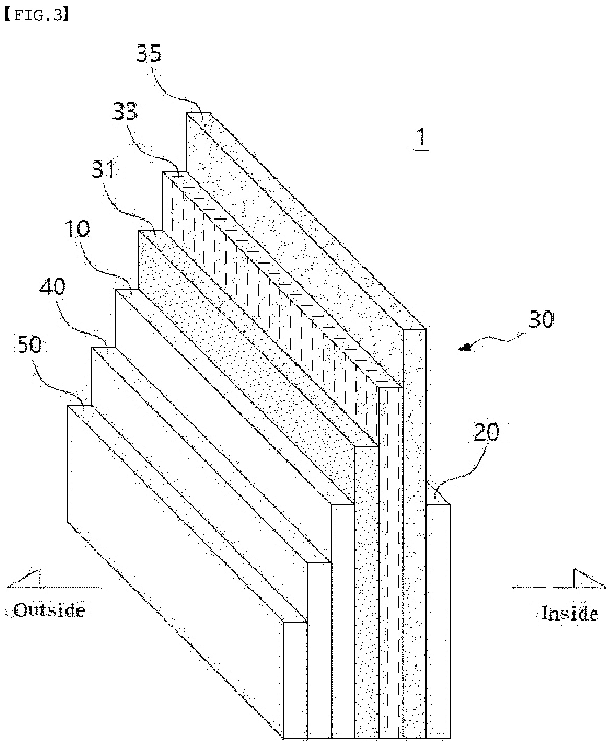

FIG. 3 is a diagram showing a window film according to another embodiment of the present disclosure, in which the Example of FIG. 3 is characterized by the addition of an adhesive layer 40 and a release film layer 50 to the Example of FIG. 2. To avoid duplication of description, only the adhesive layer 40 and the release film layer 50 will be described below.

The adhesive layer 40 is configured to be coupled to the outer surface of the outer substrate layer 10 and is configured to attach the window film to a glass surface or the like. The adhesive layer 40 may preferably be regarded as a pressure sensitive adhesive (PSA) coating layer.

The release film layer 50 refers to a configuration that is detachably coupled to the outer surface of the adhesive layer 40 in order to protect the pressure sensitive adhesive (PSA) coating layer. In the process of attaching the window film 1 to the vehicle glass or the like, the release film layer 50 is removed, and the window film 1 can be attached to the vehicle glass or the like by the exposed adhesive layer 40.

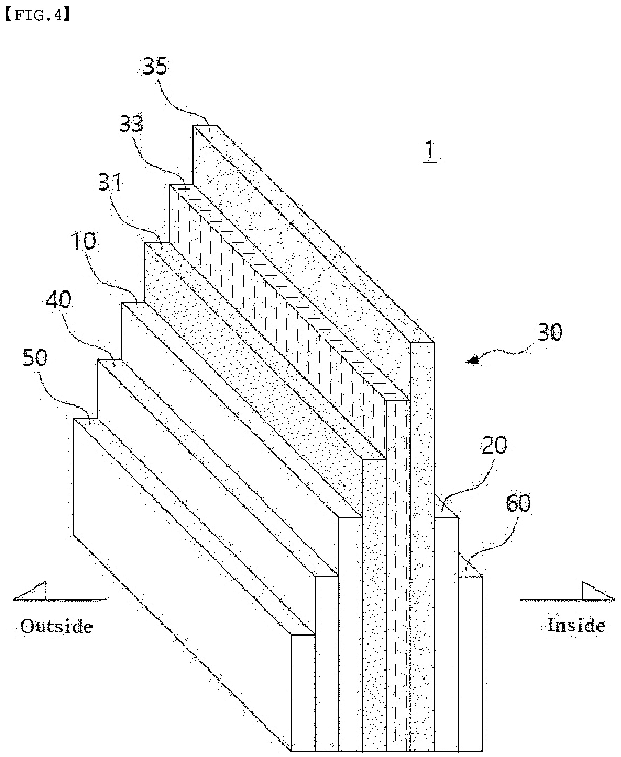

FIG. 4 is a diagram showing a window film according to another embodiment of the present disclosure. The Example of FIG. 4 is characterized in that the hard coating layer 60 is added to the Example of FIG. 3.

The hard coating layer 60 is configured to be coupled to the inner surface of the inner substrate layer 20 and refers to a scratch resistance (SR) coating layer for preventing scratches. Through the hard coating layer 60, the externally exposed surface of the window film 1 can be protected.

Hereinafter, a window film manufacturing method S1 for manufacturing the above-described window film 1 will be described.

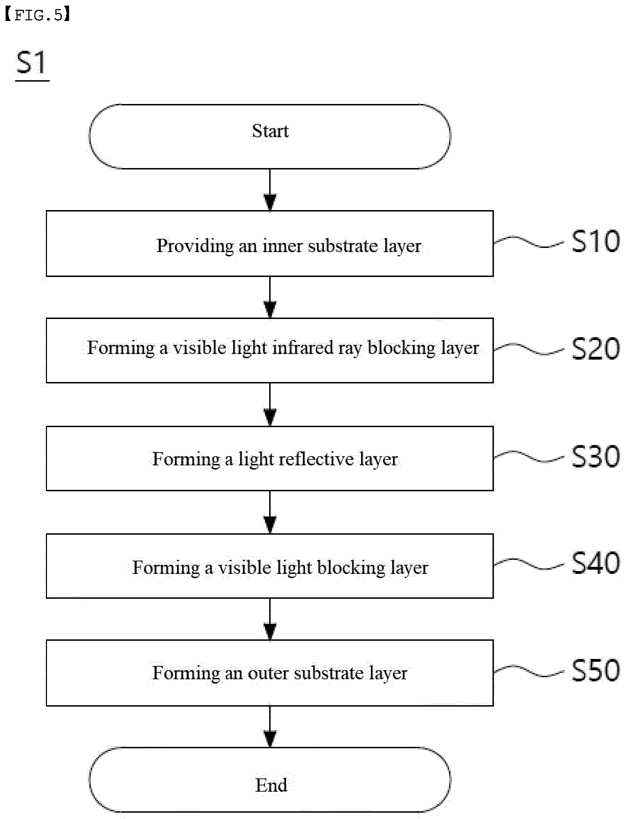

FIG. 5 is a diagram showing a window film manufacturing method S1 according to one embodiment of the present disclosure. Referring to FIG. 5, the window film manufacturing method S1 includes providing an inner substrate layer S10, forming a visible light infrared blocking layer S20, forming a light-reflective layer S30, forming a visible light-blocking layer S40, and forming an outer substrate layer S50.

Providing the inner substrate layer S10 refers to the step of providing the inner substrate layer 20 formed on the inner side of the film 1. The inner substrate layer 20 is formed on the inside window film 1 in a configuration that provides the other side to which the light-blocking layer 30 is coupled, and the inner substrate layer 20 may be coupled to the inside of the visible light infrared ray blocking layer 35. The inner substrate layer 20 may also preferably be configured as a transparent polyethylene terephthalate (PET) film and may have a thickness in the range of 10 to 100 µm, although this is not intended to limit it to any particular configuration.

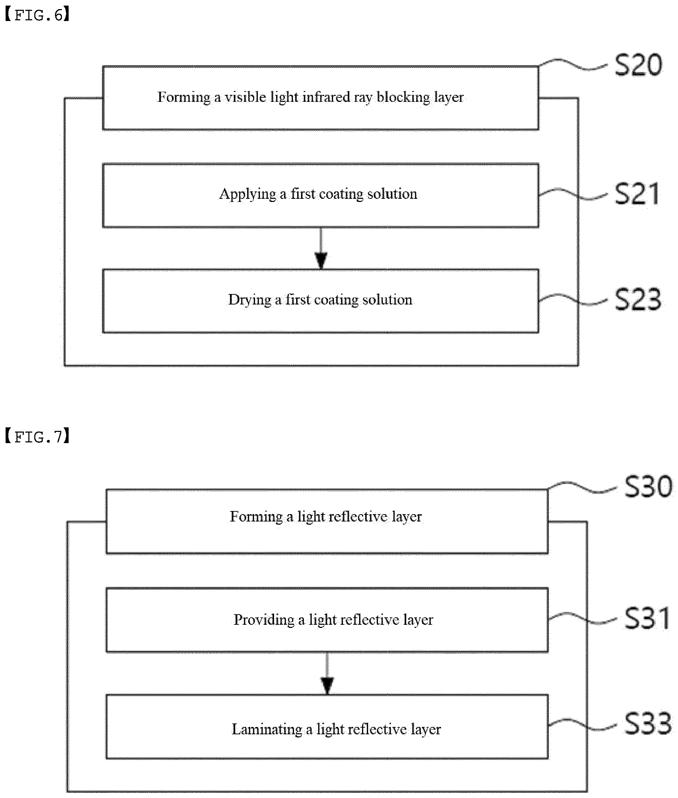

Forming the visible light infrared ray blocking layer S20 refers to the step of forming the visible light infrared ray blocking layer 35, which, after the step of providing the inner substrate layer S10, is coupled to the outer surface of the inner substrate layer 20 to form a visible light infrared ray blocking layer 35 that blocks visible light and infrared light from the light that has passed through the visible light-blocking layer 31 and the light-reflective layer 33 in sequence. FIG. 6 is a diagram showing the visible light infrared ray blocking layer formation step of FIG. 5, in which forming the visible light infrared ray blocking layer S20 includes applying a first coating solution S21 and drying a first coating solution S23.

Applying the first coating solution S21 is a step of applying the first coating solution over the inner substrate layer 20 with a dry thickness of 5 to 20 µm, preferably using a bar coater to apply the first coating solution over the inner substrate layer 20 having a thickness of 12 to 100 µm. The first coating solution may include 1 wt % to 15 wt % by weight of a carbon black dispersion solution, 1 wt % to 100 wt % by weight of a metal oxide dispersion solution, 5 wt % to 20 wt % by weight of a curing agent, 1 wt % to 20 wt % by weight of an additive, and 20 wt % to 60 wt % by weight of a solvent, relative to the total weight of the adhesive.

Drying the first coating solution S23 refers to the step of drying the applied first coating solution after applying the first coating solution S21. Preferably, drying of the first coating solution is performed as drying at a condition of 100°C to 130°C for 1 to 2 minutes.

Forming the light-reflective layer S30 refers to the step of forming a light-reflective layer 33, which, after the step of forming the visible light infrared ray blocking layer S20, is coupled to the outer surface of the visible light infrared ray blocking layer 35 and reflects the light from which the visible light is blocked by the visible light-blocking layer 31. The light-reflective layer 33 is coupled to the inner surface of the visible light-blocking layer 31 and is configured to reflect light that has passed through the visible light-blocking layer 31, and the light-reflective layer 33 can be viewed as a configuration in which a metal film is formed by depositing a metal material on the substrate. The thickness of the light-reflective layer 33 may be in a range of 12 to 100 µm in order to lower the final thickness of the product. FIG. 7 is a diagram showing forming the light-reflective layer of FIG. 5, in which forming the light-reflective layer S30 includes providing the light-reflective layer S31 and laminating the light-reflective layer S33.

Providing a light-reflective layer S31 is a step of providing a light-reflective layer 33 in which a metal film with a metal material deposited on the substrate is formed, and a light-reflective layer 33 having a thickness in the range of 12 to 100 µm may be deposited on the visible light infrared ray blocking layer 35 dried through the first coating solution drying step S23.

Laminating the light-reflective layer S33 refers to a step in which, after the step of providing the light-reflective layer S31, the provided light-reflective layer S33 is placed on top of the visible light infrared blocking layer 35 and is tightly laminated by applying uniform pressure.

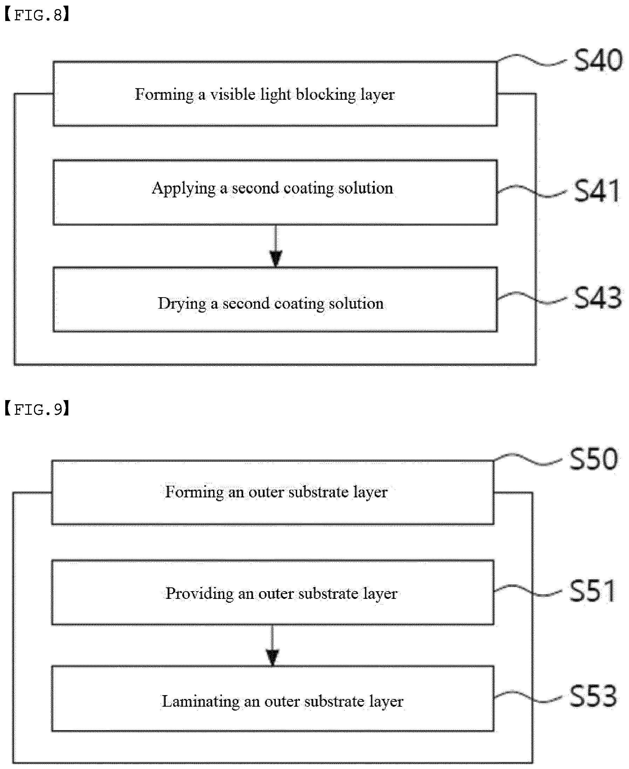

Forming a visible light-blocking layer S40 refers to the step of forming a visible light-blocking layer 31 which, after forming the light-reflective layer S30, is coupled to the outer surface of the light-reflective layer 33 to form a visible light-blocking layer 31 that allows infrared light to pass through while blocking visible light among the light entering from the outside of the film 1 in the inward direction. FIG. 8 is a diagram showing forming the visible light-blocking layer of FIG. 5, in which forming the visible light-blocking layer S40 includes applying a second coating solution S41 and drying the second coating solution S43.

Applying the second coating solution S41 is a step of applying the second coating solution on top of the light-reflective layer 33, and the second coating solution can be applied on top of the light-reflective layer 33 with a dry thickness of 5 to 20 µm using a bar coater. The second coating solution may include 1 wt % to 15 wt % by weight of a carbon black dispersion solution, 5 wt % to 20 wt % by weight of a curing agent, 1 wt % to 20 wt % by weight of other additives, and 20 wt % to 60 wt % by weight of a solvent, relative to the total weight of the adhesive.

Drying the second coating solution S43 refers to the step of drying the applied second coating solution after applying the second coating solution S41. Preferably, the drying of the first coating solution is regarded as drying at a condition of 100°C to 130°C for 2 to 2 minutes.

Forming the outer substrate layer S50 refers to the step of forming the outer substrate layer 10 that is coupled to the outer surface of the visible light-blocking layer 31 after forming the visible light-blocking layer S40. FIG. 9 is a diagram showing forming the outer substrate layer of FIG. 5, in which forming the outer substrate layer S50 includes providing the outer substrate layer S51 and laminating the outer substrate layer S53.

Providing the outer substrate layer S51 refers to a step of providing the outer substrate layer 10, in which the outer substrate layer 10 may preferably be configured as a transparent polyethylene terephthalate (PET) film, the thickness of which may be in the range of 10 to 100 µm.

Laminating the outer substrate layer S53 refers to a step in which, after providing the outer substrate layer S53, the provided outer substrate layer 10 is placed on top of the visible light-blocking layer 31 and is tightly laminated by applying uniform pressure.

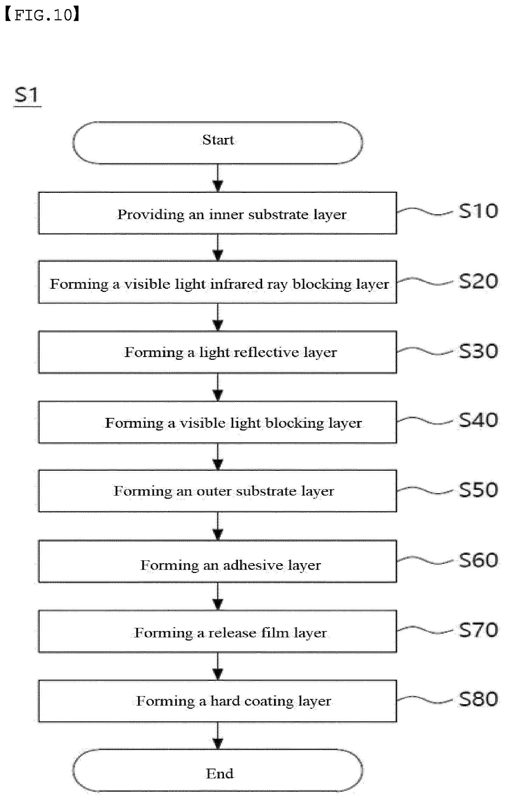

FIG. 10 is a diagram showing a window film manufacturing method S1 according to another embodiment of the present disclosure, in which forming the adhesive layer S60, forming the release film layer S70, and forming the hard coating layer S80 are added to the embodiment of FIG. 5.

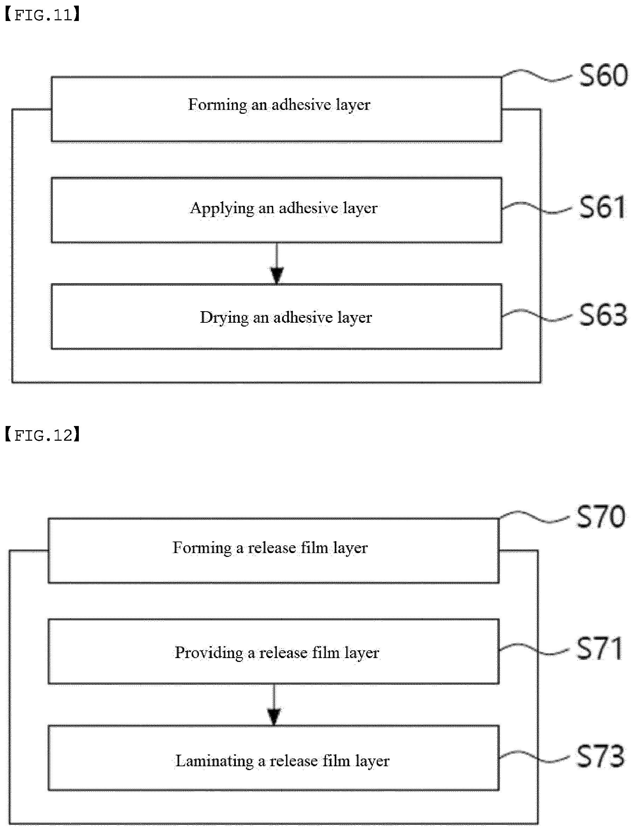

Forming the adhesive layer S60 refers to a step of forming the adhesive layer 40 on the outer surface of the outer substrate layer 10 after forming the outer substrate layer S50. The adhesive layer 40 may preferably be regarded as a pressure sensitive adhesive (PSA) coating layer. Referring to FIG. 11, which shows forming the adhesive layer of FIG. 10, forming the adhesive layer S60 includes applying the adhesive S61 and drying the adhesive S63.

Applying the adhesive S61 refers to a step of applying an adhesive to the outer substrate layer 10, preferably the pressure sensitive adhesive (PSA) can be applied to the outer substrate layer 10 at a thickness in the range of 5 to 20 µm. The pressure sensitive adhesive (PSA) may be acrylic-based, rubber-based, polyvinyl ether-based, silicone-based, etc.

Drying the adhesive S63 refers to the step of drying the applied pressure sensitive adhesive (PSA) after applying the adhesive S61. When the pressure sensitive adhesive (PSA) has been applied from 5 to 20 µm through applying the adhesive S61, the adhesive can be dried in the adhesive drying step S63, preferably at a condition of 100°C to 130°C for 1 to 2 minutes.

Forming the release film layer S70 refers to the step of forming a release film layer 50 detachably coupled to the outer surface of the adhesive layer 40, after forming the adhesive layer S60, to protect the pressure sensitive adhesive (PSA) coating layer. FIG. 12 is a diagram showing the forming the release film layer of FIG. 10, in which the forming the release film layer S70 includes providing the release film layer S71 and laminating the release film layer S73.

Providing the release film layer S71 is the step of providing the release film layer 50, which can provide a release film layer 50, preferably a release-treated transparent polyethylene terephthalate (PET) in a range of 12 to 50 µm, on the adhesive layer 40 dried by drying the adhesive S63.

Laminating the release film layer S73 refers to a step in which, after the step of providing the release film layer S71, the provided release film layer 50 is placed on top of the adhesive layer 40 and tightly laminated by applying uniform pressure.

Forming the hard coating layer S80 is a step of forming a hard coating layer 60 on the inner surface of the inner substrate layer 20 after the forming the release film layer S70, in which the hard coating layer 60 is a scratch resistance (SR) coating layer for preventing scratches. Preferably, the hard coating layer 60 may be formed to have a thickness in a range of 1 to 5 µm.

Hereinafter, the visible light transmittance, near-infrared blocking rate, visible light reflectance, near-infrared reflectance, optical properties, and heat shielding performance of the window film 1 of the present disclosure will be described through specific experiments.

### (1) Preparation of specimens

### 1) Example 1

The outer substrate layer 10 and the inner substrate layer 20 are composed of a transparent polyethylene terephthalate (PET) film having a thickness of 23 um, and a light-blocking layer 30 is formed between the two layers.

The visible light-blocking layer 31 was applied with an adhesive composition containing 2 wt % by weight of carbon black dispersion solution and 1 wt % by weight of pigment dispersion solution relative to the total weight of the adhesive, and the coating thickness was 10 µm after drying.

The light-reflective layer 33 was made of polyethylene terephthalate (PET) with a thickness of 23 um, and nickel (Ni)/silver (Ag)/nickel (Ni) cross-laminated using a sputtering process, and

the visible light infrared ray blocking layer 35 was applied with an adhesive composition containing 1 wt % by weight of carbon black dispersion solution, 0.5 wt % by weight of pigment solution, and 40 wt % by weight of metal oxide relative to the total weight of the adhesive, and dried to a coating thickness of 10 µm.

In addition, an acrylic-based pressure-sensitive adhesive was used to form a 6 µm thick adhesive layer 40, a 23 µm thick release film layer 50 was formed from a transparent polyethylene terephthalate (PET) substrate with a silicone release treatment, and a 2 um thick scratch-resistant coating was applied to form a hard coating layer 60.

A specimen was prepared by attaching the prepared window film 1 to a glass plate.

### 2) Example 2

The outer substrate layer 10 and the inner substrate layer 20 are composed of a transparent polyethylene terephthalate (PET) film having a thickness of 19 um, and a light-blocking layer 30 is formed between the two layers.

The visible light-blocking layer 31 was applied with an adhesive composition containing 2 wt % by weight of carbon black dispersion solution and 1 wt % by weight of pigment dispersion solution relative to the total weight of the adhesive, and the coating thickness was 10 µm after drying.

The light-reflective layer 33 was made of polyethylene terephthalate (PET) with a thickness of 23 um, and nickel (Ni)/silver (Ag)/nickel (Ni) cross-laminated using a sputtering process, and

the visible light infrared ray blocking layer 35 was applied with an adhesive composition containing 1 wt % by weight of carbon black dispersion solution, 0.5 wt % by weight of pigment solution, and 40 wt % by weight of metal oxide relative to the total weight of the adhesive, and dried to a coating thickness of 10 µm.

In addition, an acrylic-based pressure-sensitive adhesive was used to form a 6 um thick adhesive layer 40, a 23 µm thick release film layer 50 was formed from a transparent polyethylene terephthalate (PET) substrate with a silicone release treatment, and a 2 µm thick scratch-resistant coating was applied to form a hard coating layer 60.

The total thickness of the window film 1 thus prepared was 112 um, and specimens were prepared by attaching the window film to a glass plate.

### 3) Comparative Example 1

The outer substrate layer 10 and the inner substrate layer 20 are composed of a transparent polyethylene terephthalate (PET) film with a thickness of 23 µm, and only a visible light infrared blocking layer 35 is formed between the two layers.

The visible light infrared ray blocking layer 35 was applied with an adhesive composition containing 5 wt % by weight of carbon black dispersion solution, 3 wt % by weight of pigment dispersion solution, and 40 wt % by weight of metal oxide relative to the total weight of the adhesive, and the coating thickness was 10 µm after drying.

An acrylic-based pressure-sensitive adhesive was used to form a 6 µm thick adhesive layer 40, a 23 µm thick release film layer 50 was formed from a transparent polyethylene terephthalate (PET) substrate with a silicone release treatment, and a 2 um thick scratch-resistant coating was applied to form a hard coating layer 60.

A specimen was prepared by attaching the prepared window film 1 to a glass plate.

### 4) Comparative Example 2

The outer substrate layer 10 and the inner substrate layer 20 are composed of a transparent polyethylene terephthalate (PET) film with a thickness of 19 µm, and only a visible light infrared blocking layer 35 is formed between the two layers.

The visible light infrared ray blocking layer 35 was applied with an adhesive composition containing 5 wt % by weight of carbon black dispersion solution, 3 wt % by weight of pigment dispersion solution, and 40 wt % by weight of metal oxide relative to the total weight of the adhesive, and the coating thickness was 10 um after drying.

An acrylic-based pressure-sensitive adhesive was used to form a 6 um thick adhesive layer 40, a 23 µm thick release film layer 50 was formed from a transparent polyethylene terephthalate (PET) substrate with a silicone release treatment, and a 2 µm thick scratch-resistant coating was applied to form a hard coating layer 60.

The total thickness of the window film 1 thus prepared was 79 µm, and specimens were prepared by attaching the window film to a glass plate.

### 5) Comparative Example 3

The outer substrate layer 10 and the inner substrate layer 20 are composed of a transparent polyethylene terephthalate (PET) film with a thickness of 19 um, and a light-blocking layer 30 is formed therebetween, but there is no visible light-blocking layer 31, and only a light-reflective layer 33 and a visible light infrared ray blocking layer 35 are formed.

The light-reflective layer 33 is made of polyethylene terephthalate (PET) substrate with a thickness of 23 µm, and nickel (Ni)/chromium (Cr) is laminated using a sputtering process.

The visible light infrared ray blocking layer 35 was applied with an adhesive composition containing 5 wt % by weight of carbon black dispersion solution, 3 wt % by weight of pigment dispersion solution, and 40 wt % by weight of metal oxide relative to the total weight of the adhesive, and the coating thickness was 10 µm after drying.

In addition, an acrylic-based pressure-sensitive adhesive was used to form a 6 um thick adhesive layer 40, a 23 µm thick release film layer 50 was formed from a transparent polyethylene terephthalate (PET) substrate with a silicone release treatment, and a 2 µm thick scratch-resistant coating was applied to form a hard coating layer 60.

The total thickness of the window film 1 thus prepared was 83 µm, and specimens were prepared by attaching the window film to a glass plate.

### (2) Experiment 1

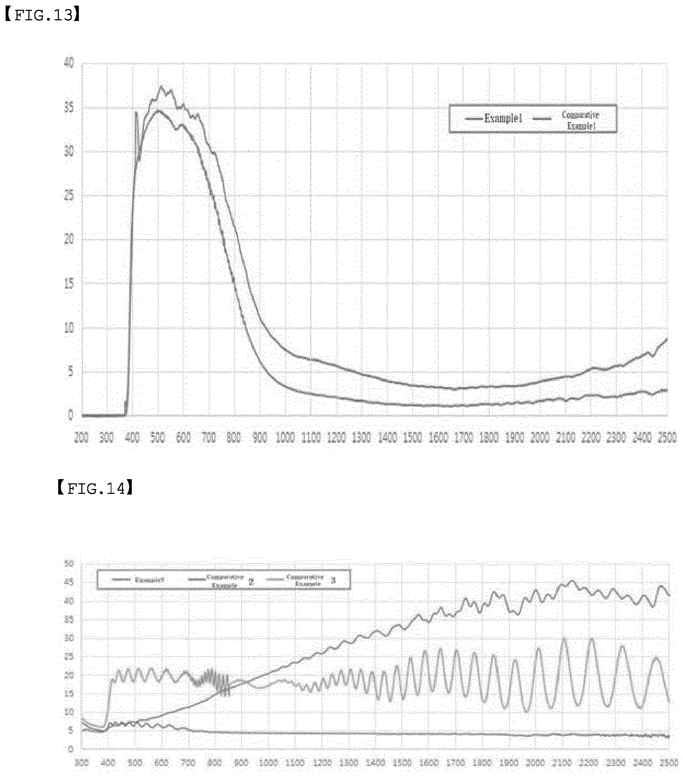

- Purpose of experiment: Comparison of visible light transmittance and near-infrared ray blocking rate
- Experiment method: Specimens from Example 1 and Comparative Example 1 were used, and spectral transmittance was measured using a V-770 Spectrophotometer from Jasco with a measurable wavelength range of 190 to 2,000 nm and a resolution of up to 0.1 nm, which meets KS L 2514.
- Experiment result: The results of measuring the transmittance of the specimen as a function of wavelength according to KS L 2514 are shown in the graph shown in FIG. 13, and the visible light transmittance (VLT) and near-infrared (780 nm to 2,500 nm) cutoff for Example 1 and Comparative Example 1 are shown in the table below.

**[Table 1]**

| Division | Visible light transmittance | Near-infrared ray blocking rate |
|---|---|---|
| Example 1 | 33.2% | 97.4% |
| Comparative Example 1 | 34.6% | 94.2% |

The visible light (380 nm to 780 nm) transmittance was similar in both Example 1 and Comparative Example 1, but the near-infrared (780 nm to 2,500 nm) blocking rate was higher in Example 1. It is confirmed that by configuring the visible light-blocking layer 31 and the light-reflective layer 33 in addition to the visible light infrared ray blocking layer 35, the near-infrared blocking rate can be increased while achieving similar visible light transmittance.

### (3) Experiment 2

- Purpose of experiment: Comparison of visible light reflectance and near-infrared reflectance
- Experiment method: Specimens from Example 2, Comparative Example 2, and Comparative Example 3 were used, and spectral reflectance was measured using a V-770 Spectrophotometer from Jasco with a measurable wavelength range of 190 to 2,000 nm, resolution up to 0.1 nm, and conforming to KS L 2514.
- Experiment result: The results of measuring the reflectance of the specimens as a function of wavelength according to KS L 2514 are shown in the graph shown in FIG. 14, and the visible light (380 nm to 780 nm) reflectance and near-infrared (780 nm to 2,500 nm) reflectance of Example 2, Comparative Example 2, and Comparative Example 3 are shown in the table below.

**[Table 2]**

| Division | Visible light reflectance | Near-infrared reflectance |
|---|---|---|
| Example 2 | 8.4% | 33.4% |
| Comparative Example 2 | 6.5% | 4.2% |
| Comparative Example 3 | 20.2% | 18.7% |

In Example 2, the reflectivity in the visible light (380 nm to 780 nm) region was reduced to less than 10% through the visible light-blocking layer 31 to prevent the mirror phenomenon of the film 1, and the near-infrared (780 nm to 2,500 nm) reflectivity was kept high at 33.4% to achieve the heat reflection effect.

On the other hand, in Comparative Example 2, the light-blocking layer 30 is composed of only the visible light infrared ray blocking layer 35, and the visible light reflectivity is 6.5%, which does not cause a mirror phenomenon, but the near-infrared reflectivity is low at 4.2%, which does not block the heat energy entering the room properly.

In Comparative Example 3, in which the visible light-blocking layer 31 was removed and only the light-reflective layer 33 and the visible light infrared ray blocking layer 35 were formed, the near-infrared reflectivity dropped compared to Example 2, and in particular, the visible light reflectivity was measured to be very high by 20.2%, and the problem of severe mirror phenomenon in the film 1 was confirmed in Comparative Example 3.

### (4) Experiment 3

- Purpose of experiment: Comparison of optical properties
- Experiment method: Specimens of Example 1 and Comparative Example 1 were used, and the measurable wavelength range was 190 to 2,000 nm, and the resolution was up to 0.1 nm. The transmittance and reflectance of the specimen were measured from 200 to 2,700 nm using a V-770 Spectrophotometer of Jasco, which meets the KS L 2514 standard, and each optical property value was calculated according to the optical property formula specified in the standard.
- Experiment result: The values of optical properties calculated according to the KS L 2514 standard are shown in the table below.

**[Table 3]**

| Property | | Unit | Example 1 | Comparative Example 1 |
|---|---|---|---|---|
| Visible Light Transmittance | | % | 33.2 | 34.6 |
| Visible Light Reflectance | Ext | % | 8.4 | 6.1 |
| | In | % | 8.5 | 6.0 |
| Visible Light Absorptance | | % | 60.0 | 59.3 |
| Near Infrared Rays Rejected | | % | 96.6 | 92.5 |
| Solar Radiation Transmittance | | % | 16.7 | 21.7 |
| Solar Radiation Reflectance | | % | 15.6 | 5.4 |
| Solar Radiation Absorptance | | % | 67.6 | 72.9 |
| UV Block | | % | 99.9 | 99.0 |
| Shading Coefficient | | - | 0.47 | 0.54 |
| Solar Heat Gain Coefficient | | - | 0.39 | 0.46 |
| U-Value | | % | 6.00 | 6.00 |
| Total Solar Energy Rejected | | % | 61 | 54 |

In the case of Example 1, as shown in the table above, the near-infrared blocking rate was higher than that of Comparative Example 1, and in particular, the reflectivity of solar energy was relatively improved, which proved to be a better solar energy blocking effect by blocking the re-emission of solar energy into the room by absorption. The total solar energy rejected (TSER) of Example 1 was improved by 7% compared to Comparative Example 1.

### (5) Experiment 4

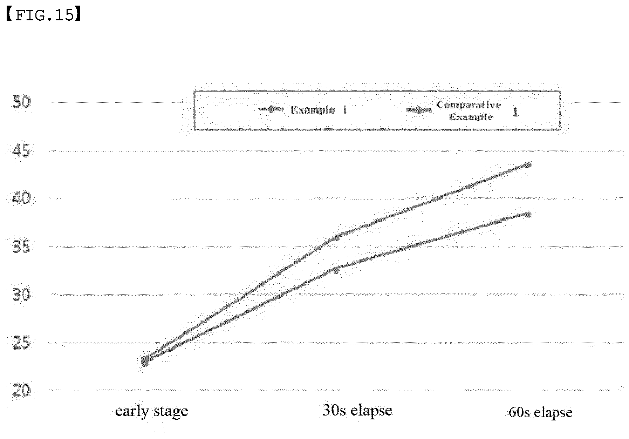

- Purpose of experiment: Comparison of actual thermal blocking performance
- Experiment method: After attaching the films of Example 1 and Comparative Example 1 to a glass plate with a width of 150 mm, a length of 150 mm, and a thickness of 5 mm, an infrared lamp was operated to measure the temperature change caused by the heat of the infrared lamp on the front of the glass plate to which the film was attached using a thermal imaging camera. A Philips RE95-E 230V infrared lamp was used, and a power connection device capable of operating the infrared lamp was prepared. As a thermal imaging camera, FLIR's T62101 was used. The distance from the film to the thermal imaging camera was set to 30 cm, and the measurement times were initially (laboratory room temperature 23°C ± 1°C), 30s after a lapse, and 60s after a lapse.
- Experiment result: The temperature change graph is as shown in FIG. 15, and the table below shows temperature values for each measurement time.

**[Table 4]**

| Division | Example 1 | Comparative Example 1 |
|---|---|---|
| Early stage | 23.0°C | 23.3°C |
| 30s elapsed | 32.7°C | 36.0°C |
| 60s elapsed | 38.5°C | 43.6°C |

As a result of the evaluation of the actual thermal blocking performance, it was confirmed that the effect of blocking the thermal energy passing through the film by the light reflection effect in the case of Example 1 is much better than that of Comparative Example 1.

The above-detailed description is to illustrate the present disclosure. In addition, the above description shows and describes preferred embodiments of the present disclosure, and the present disclosure may be used in various environments such that various embodiments are diversely combined or modified. That is, various changes or modifications to the embodiments are possible without departing from the scope of the concept of the disclosure disclosed herein, the scope equivalent to the written disclosure, and/or the scope of skill or knowledge in the relevant art. The embodiments are provided to describe the best state for implementing the technical idea of the present disclosure, and various changes required in the specific applications and uses of the present disclosure are possible. Therefore, the detailed description of the present disclosure is not intended to limit the present disclosure to the disclosed embodiments. The appended claims should be construed as including other embodiments.

## Claims

1. A window film comprising:
an outer substrate layer provided as an outer layer of the film;
an inner substrate layer provided as an inner layer of the film; and
a light-blocking layer positioned between the outer substrate layer and the inner substrate layer, the light-blocking layer preventing a mirror phenomenon of the film and preventing thermal energy absorbed by the film from being re-emitted into the inside of the film.

2. The window film of claim 1, wherein the light-blocking layer comprises a visible light-blocking layer coupled to an inner surface of the outer substrate layer and configured to allow transmission of an infrared component of light externally introduced from the outside to the inside of the film but not to allow transmission of a visible light component.

3. The window film of claim 2, wherein the a visible light-blocking layer includes carbon black

4. The window film of claim 3, wherein the visible light-blocking layer comprises 1 wt % to 15 wt % by weight of a carbon black dispersion solution, 5 wt % to 20 wt % by weight of a curing agent, 1 wt % to 20 wt % by weight of an additive, and 20 wt % to 60 wt % by weight of a solvent, relative to the total weight of an adhesive.

5. The window film of claim 2, wherein the light-blocking layer comprises a light-reflective layer coupled to an inner surface of the visible light-blocking layer and configured to reflect the components of the externally introduced light except for the visible light component that is blocked by the visible light-blocking layer among the components of the light externally introduced from the outside to the inside of the film.

6. The window film of claim 5, wherein the light-reflective layer is a metal film formed by depositing a metal material on a substrate.

7. The window film of claim 6, wherein the metal material comprises at least one of nickel (Ni), chromium (Cr), aluminum (Al), steel use stainless (SuS), titanium (Ti), silver (Ag), indium tin oxide (ITO), and aluminum doped zinc oxide (Al-doped ZnO) .

8. The window film of claim 5, wherein the light-blocking layer comprises a visible-light/infrared-ray blocking layer coupled to an inner surface of the light-reflective layer and configured to block a visible light component and an infrared component of the components of the light having sequentially passed through the visible light-blocking layer and the light-reflective layer.

9. The window film of claim 8, wherein the visible-light/infrared-ray blocking layer comprises carbon black and a metal oxide.

10. The window film of claim 9, wherein the visible-light/infrared-ray blocking layer comprises 1 wt % to 15 wt % by weight of a carbon black dispersion solution, 1 wt % to 100 wt % by weight of a metal oxide dispersion solution, 5 wt % to 20 wt % by weight of a curing agent, 1 wt % to 20 wt % by weight of an additive, and 20 wt % to 60 wt % by weight of a solvent, relative to the total weight of an adhesive.

11. The window film of claim 10, wherein the metal oxide dispersion solution comprises 1 wt % to 20 wt % by weight of a metal oxide, 5 wt % to 20 wt % by weight of a dispersant, and 50 wt % to 90 wt % by weight of an organic solvent.

12. The window film of claim 11, wherein the metal oxide is selected from the group consisting of antimony tin oxide (ATO), tungsten trioxide (WO3), indium tin oxide (ITO), and non-radioactive stable isotope heat shielding composite tungsten oxides represented by (y)Ax(z)WO(3-n) wherein (y)A is a non-radioactive stable isotope, x is the number of elements doped into (y)A by reductive calcination, y is the mass number of A, z is the mass number of W, and (3-n) refers to oxygen vacancies .

13. The window film of claim 11, wherein the metal oxide has a particle size in a range of 5 to 100 nm.

14. The window film of claim 8, wherein the inner substrate layer is coupled to an inner surface of the visible-light/infrared-ray blocking layer.

15. A method of manufacturing a window film, the method comprising:
providing an inner substrate layer provided as an inner layer of the film;
forming a visible-light/infrared-ray blocking layer coupled to an outer surface of the inner substrate layer and configured to block a visible light component and an infrared component from light sequentially having passed through a visible light-blocking layer and an light-reflective layer, after the forming of the inner substrate layer;
forming the light-reflective layer coupled to an outer surface of the visible-light/infrared-ray blocking layer and configured to reflect light that is free of a visible light component blocked by the visible light-blocking layer, after the forming the visible-light/infrared-ray blocking layer;
forming the visible light-blocking layer coupled to an outer surface of the light-reflective layer and configured to allow transmission of an infrared component of the components of the light externally introduced from the outside to the inside of the film but not to allow transmission of a visible light component after the forming of the light-reflective layer; and
forming an outer substrate layer coupled to an outer surface of the visible light-blocking layer after the forming of the visible light-blocking layer.

16. The method of claim 15, wherein the forming of the visible-light/infrared-ray blocking layer comprises:
applying a first coating solution on the inner substrate layer; and
drying the first coating solution after the applying of the first coating solution,
wherein the first coating solution comprises 1 wt % to 15 wt % by weight of a carbon black dispersion solution, 1 wt % to 100 wt % by weight of a metal oxide dispersion solution, 5 wt % to 20 wt % by weight of a curing agent, 1 wt % to 20 wt % by weight of an additive, and 20 wt % to 60 wt % by weight of solvent, relative to the total weight of an adhesive.

17. The method of claim 15, wherein the forming of the light-reflective layer comprises:
providing the light-reflective layer in which a metal film with a metal material deposited on a substrate is formed; and
performing lamination by placing and pressing the light-reflective layer on the visible-light/infrared-ray blocking layer so that the light-reflective layer is tightly combined with the visible-light/infrared-ray blocking layer.

18. The method of claim 15, wherein the forming of the visible light-blocking layer comprises:
applying a second coating solution on the light-reflective layer; and
drying the second coating solution after the applying of the second coating solution,
wherein the second coating solution comprises 1 wt % to 15 wt % by weight of a carbon black dispersion solution, 5 wt % to 20 wt % by weight of a curing agent, 1 wt % to 20 wt % by weight of an additive, and 20 wt % to 60 wt % by weight of a solvent, relative to the total weight of an adhesive.

19. The method of claim 15, wherein the forming of the outer substrate layer comprises:
providing the outer substrate layer; and
performing lamination by placing and pressing the provided outer substrate layer on the visible light-blocking layer so that the outer substrate layer is tightly combined with the visible light-blocking layer.
